# EUROPÄISCHE PATENTSCHRIFT

(11) **EP 1 616 376 B1**
(45) Veröffentlichungstag und Bekanntmachung des Hinweises auf die Patenterteilung: **04.10.2006**
(21) Anmeldenummer: 04725282.0
(22) Anmeldetag: 02.04.2004
(51) Int. Cl.: H02G 3/04

(54) **KABELFÜHRUNG**
CABLE-ROUTING DEVICE
GUIDE-CABLE

(30) Priorität: 07.04.2003 DE 20305679 U
(43) Veröffentlichungstag der Anmeldung: 18.01.2006
(73) Patentinhaber: igus GmbH, 51147 Köln (DE)
(72) Erfinder: BLASE, Frank, 51429 Bergisch Gladbach (DE); HERMEY, Andreas, 53773 Hennef (DE)
(74) Vertreter: Gudat, Axel
(86) Internationale Anmeldenummer: PCT/DE2004/000721
(87) Internationale Veröffentlichungsnummer: WO 2004/093279

(56) Entgegenhaltungen:
- DE-U- 9 017 373
- US-A- 5 824 957
- US-A- 6 042 155

## Beschreibung

Die Erfindung betrifft eine Kabelführung aus gelenkig miteinander verbundenen und jeweils zumindest in zwei Richtungen gegeneinander abwinkelbaren, stirnseitig offenen Gliedern, die in Längsrichtung der Kabelführung hintereinander angeordnet sind und mittels radial außenseitiger Führungselemente zumindest einen Führungskanal bilden, wobei zugkräfteaufnehmende Gelenkverbindungen zwischen miteinander gelenkig verbundenen Gliedern innerhalb der Kabelführung angeordnet sind und wobei die Glieder jeweils miteinander korrespondierende Gelenkelemente aufweisen.

Derartige Kabelführungen werden zur Führung von Kabeln, Medienleitungen, Schläuchen oder dergleichen eingesetzt, insbesondere bei Robotern.

Bei gattungsgemäßen Kabelführungen, wie auch bei der erfindungsgemäßen Kabelführung, sind die Gelenkverbindungen innerhalb der Kabelführung, d. h. radial beabstandet von den jeweiligen außenseitigen Führungselementen angeordnet; vorzugsweise sind die Gelenkverbindungen im Zentrum der Kabelführung angeordnet, d. h. mittig zwischen zumindest zwei gegenüberliegenden, radial außenseitigen Führungselementen. Vorzugsweise gilt dies für sämtliche Gelenkverbindungen der Kabelführung. Zwischen den Gelenkverbindungen und den radial am weitest außenliegenden Führungselementen ist somit zumindest ein Teilbereich eines Führungskanals zur Aufnahme von Kabeln, Leitungen oder dergleichen vorgesehen. Bei bekannten Kabelführungen sind die Glieder gelenkig miteinander verbunden, wobei zum Zusammenhalt der Kabelführung ein durch die Gelenkverbindungen geführtes, sich über die gesamte Kabelführungslänge erstreckendes flexibles Halteglied in Form eines Drahtsseiles oder dergleichen vorgesehen ist. Hierdurch muss die Kabelführung unter Lösung und Entfernung des Drahtseiles zumindest von einem Ende her praktisch vollständig zerlegt werden, beispielsweise um von den Endbereichen beabstandete, beschädigte Glieder austauschen zukönnen. Zum Zusammenfügen der Kette sind dann sämtliche Glieder, die ausgehend von dem beschädigten Glied einem Ende der Kabelführung zugewandt sind, wieder an dem Drahtseil zu montieren. Das Zusammenfügen und Demontieren der Kabelführung ist somit sehr aufwändig. Der Einsatz derartiger Kabelführungen ohne Drahtseile scheitert aber oftmals daran, dass die Kabel führung dann nicht mehr ausreichende Zugkräfte aufnehmen kann.

Der Erfindung liegt die Aufgabe zugrunde, eine Kabelführung bereitzustellen, die insbesondere in Längsrichtung hohe Zugkräfte und/oder Schubkräfte aufnehmen kann und deren Zusammenfügung und/oder Demontage erleichtert ist.

Die Aufgabe wird durch eine Kabelführung gelöst, bei welcher zumindest eine Gelenkverbindung derart ausgeführt ist, dass zur Ausbildung und/oder Lösung der Gelenkverbindung die jeweils miteinander zu verbindenden und/oder voneinander zu lösenden Glieder und/oder Gelenkelemente in einer Richtung zusammenzuführen und/oder zu trennen sind, die zu der Längsachse der Kabelführung einen Winkel einschließt. Vorzugsweise erfolgt die Bewegung der Gelenkelemente zum Verbinden und/oder Lösen der Gelenkverbindung unabhängig von deren Befestigungsbereichen, so dass beispielsweise die Gelenkelemente insgesamt in der genannten Richtung zu bewegen sind, gegebenenfalls zusammen mit den Befestigungsbereichen derselben, und nicht nur die unmittelbar wirksam werden Befestigungsbereiche wie beispielsweise die eigentlichen Rastverbindungselemente. Zur Lösung der Gelenkverbindung, beispielsweise zum Entrasten derselben, ist somit eine Bewegung der Gelenkelemente und/oder der korrespondierenden Glieder in einer Richtung notwendig, die von der Kabelführungslängsrichtung verschieden ist. Vorzugsweise sind mehrere oder sämtliche der Gelenkverbindungen der Kabelführung derart ausgeführt. Hierdurch liegt bei einer Zug- und/oder Schubbeanspruchung der Kabelführung in Längsrichtung derselben die Kraftflussrichtung nicht in der Richtung, in welcher die Glieder bestimmungsgemäß zusammenzuführen und/oder voneinander zu beabstanden sind, um jeweils eine Gelenkverbindung auszubilden und/oder zu lösen. Die Gelenkverbindung kann daher besonders hohe Zugkräfte aufnehmen. Ein vergleichsweise einfaches Lösen und/oder Fügen der Glieder ist jedoch möglich, wenn die Glieder in einer von der Kabelführungslängsachse verschiedenen Richtung aufeinander zu oder voneinander weg zu bewegen sind. Hierzu können die Gelenkelemente mit zu hintergreifenden Hinterschneidungen, beispielsweise in Form von hakenförmigen Bereichen, versehen sein. Die Kabelführungslängsrichtung wird hierbei durch die Längsrichtung der gestreckt angeordneten Kabelführung definiert.

Das Zusammenfügen und/oder Trennen der Glieder kann im wesentlichen durch eine lineare Bewegung quer zur Kabelführungslängsachse, eine Schwenkbewegung oder eine kombinierte Bewegung erfolgen. Die jeweilige Angabe der Füge- und/oder Trennungsrichtung kann sich insbesondere auf den unmittelbaren Vorgang der Herstellung der Gelenkverbindung und/oder Trennung derselben beziehen. Der Füge- bzw. Trennvorgang der Gelenkverbindung kann insbesondere beginnen, wenn die Gelenkelemente aneinander stoßen bzw. wenn zur Trennung der Gelenkelemente in Kabelführungslängsrichtung eine Kraft zu überwinden ist. Zum Fügen der Gelenkverbindung können die Glieder auch zunächst im wesentlichen in Kabelführungslängsrichtung aufeinander zu bewegt werden, woran anschließend ein Versatz oder eine Schwenkbewegung zu dieser Richtung erfolgen kann, um die Gelenkverbindung zu fügen, ohne dass die Bewegung der Glieder aufeinander zu durch diesen Bewegungsablauf beschränkt ist. Vorzugsweise wirken die in Kabelführungslängsrichtung zugkräfteaufnehmenden Gelenkverbindungen zwischen unmittelbar benachbarten Gliedern durch Befestigungsmittel, die unabhängig von einigen oder sämtlichen anderen Gelenkverbindungen lösbar und/oder betätigbar sind.

Durch die Anordnung der Gelenkverbindungen innerhalb der Kabelführung sind diese außenseitig durch die Führungselemente mehr oder weniger abgeschirmt, so dass die Gelenkverbindungen nicht durch unbeabsichtigte äußere Eingriffe oder Einwirkungen beeinträchtigt werden können, ferner kann die Außenseite der Kabelführung unabhängig von den Gelenkverbindungen gestaltet werden. Ferner können die innerhalb der Kabelführung angeordneten Gelenkverbindungen besonders an die jeweiligen Erfordernisse angepasst werden, was bei radial außenliegend an den Gliedern angeordneten Gelenkverbindungen nicht immer möglich ist, insbesondere bei Berücksichtigung hoher auf die Kabelführung einwirkender Kräfte, insbesondere hoher Zugkräfte oder seitlicher Kräfte.

Die Gelenkelemente miteinander verbundener Glieder können als Gelenkkörper, insbesondere als Gelenkkugel, und als korrespondierende Gelenkkörperaufnahme, insbesondere als Kugelpfanne ausgebildet sein. Durch ein derartiges Kugelgelenk kann zumindest in einem gegebenen Bereich eine sphärische Bewegung der gelenkig verbundenen Glieder gegeneinander erfolgen. Gegebenenfalls kann die Bewegung der Glieder jedoch auch in einer oder mehreren Richtungen weiter eingeschränkt sein. Gegebenenfalls kann der Gelenkkörper auch eher als Gelenkstift und die Gelenkaufnahme als Gelenkhülse ausgeführt sein, wodurch im wesentlichen eine gelenkige Bewegung in einer Ebene ermöglicht werden kann.

Vorzugsweise ist die Gelenkverbindung derart ausgeführt, dass die Richtung zum Zusammenführen der Gelenkelemente zur Ausbildung der Gelenkverbindung und/oder zur Trennung der Gelenkverbindung mit der Kabelführungslängsachse einen Winkel von 45° bis 135°, vorzugsweise 60° bis 120°, insbesondere ca. 90°, einschließt. Entsprechendes kann auch alternativ oder gleichzeitig für die Zusammenführ- bzw. Trennrichtung der Glieder selber gelten. Hierdurch wird in ausreichendem Maß sichergestellt, dass die Füge- bzw. Trennrichtung der Glieder oder der Gelenkelemente von der Kabelführungslängsrichtung verschieden ist, so dass hohe Zugkräfte aufgenommen werden können.

Vorzugsweise steht die Längsachse des Gelenkkörpers, die sich durch dessen Befestigungsbereich erstrecken kann, in einem Winkel zu der Kabelführungslängsachse, wobei die Längsachse des Gelenkkörpers im Falle eines Kugelgelenkes durch den Kugelmittelpunkt und die Mitte des Befestigungsbereiches der Gelenkkugel definiert werden können. Die Achse der Gelenkkörperaufnahme kann durch die Symmetrieachse der Aufnahme oder durch die Einführrichtung des Gelenkkörpers in die Aufnahme bei an der Aufnahme anliegendem Gelenkkörper definiert sein. Die Achse des Gelenkkörpers und/oder der Gelenkaufnahme können einen Winkel von 45° bis 135°, vorzugsweise 60° bis 120°, insbesondere ca. 90°, mit der Kabelführungslängsachse einschließt, ohne hierauf beschränkt zu sein.

Die Formschlussverbindung ist vorzugsweise derart ausgeführt, dass in Zugrichtung bzw. Kabelführungslängsrichtung ein Formschluss erzielt wird, vorzugsweise ein vollumfänglicher Formschluss in einer die Kabelführungslängsachse enthaltenden Ebene.

Vorzugsweise sind die Gelenkelemente jeweils von Unterstützungen oder Bereichen des jeweiligen Gliedes unterstützt, die als stegartige Bereiche oder als Sockel ausgeführt sein können, wobei die stegartigen Bereiche und/oder die Sockeloberseiten in einer Richtung senkrecht zu der Kabelführungslängsachse versetzt zueinander angeordnet sind. Die miteinander zu verbindenden Gelenkelemente werden somit jeweils aus unterschiedlichen Richtungen unterstützt. Die Sockel sind vorzugsweise derart angeordnet, dass sie in Kabelführungslängsrichtung miteinander fluchtend angeordnet sind. Die Sockel können hierbei eine Breite aufweisen, die im wesentlichen der Breite des mit der die Längskörperaufnahme versehenen Gelenkelementes entspricht oder diese übersteigt, so dass eine breite Stützfläche vorgesehen ist.

Zur Erleichterung der Formschlussverbindung, insbesondere der Rastverbindung, kann benachbart der Aufnahmeöffnung zur Einführung des korrespondierenden Gelenkelementes mindestens eine sich in deren Längsrichtung zumindest teilumfänglich oder vollumfänglich um die Aufnahme erstreckende Ausnehmung oder sonstige Materialschwächung vorgesehen sein. Die Ausnehmung kann in Art einer Nut oder Ringnut ausgeführt sein, die jeweils zur Füge- und/oder Trennrichtung der Gelenkelemente oder zu einer Querrichtung zu dieser geöffnet sein kann. Die Materialschwächung erstreckt sich vorzugsweise in einer Richtung, die von der Kabelführungslängsrichtung verschieden ist. Ein vollumfänglicher Formschluss in zumindest einer die Kabelführungslängsachse enthaltenden Ebene wird hierdurch nicht unterbrochen.

Vorzugsweise sind jeweils eines oder beide der Gelenkelemente eines Gliedes jeweils an einer Strebe angeordnet, die gegebenenfalls ein Führungselement trägt, wobei die Strebe mindestens eine sich in Kabelführungslängsrichtung erstreckende Durchbrechung aufweist, die der wahlweisen Aufnahme einer Leitung oder anderen Einrichtung wie beispielsweise eines sich über mehrere Glieder oder die gesamte Kabelführung erstreckendes federelastisches Element wie eines Federstabes dienen kann, der einer bestimmungsgemäßen Auslenkung der Kabelführung aus ihrer gestreckten Anordnung eine elastische Rückstellkraft entgegensetzt, was insbesondere für Anwendungen im Bereich der Robotertechnik von Vorteil ist. Dies kann bei Streben unterschiedlicher Erstreckungsrichtung oder Ausgestaltung realisiert sein. Die Streben können hierbei einer Innenraumaufteilung der Kabelführung dienen und diese in verschiedene teilweise oder vollständig voneinander getrennte Führungskanäle zergliedern, auch wenn diese keine Führungselemente tragen. Gegebenenfalls können beide Gelenkelemente eines Gliedes auf einer gemeinsamen Strebe angeordnet sein. Gegebenenfalls können hierbei mehrere Durchbrechungen in Umfangsrichtung und/oder radialer Richtung der Kabelführung an einer Strebe oder einem Sockel vorgesehen sein.

Die Durchbrechung kann insbesondere in Füge- bzw. Trennrichtung der Gelenkelemente dem Gelenkelement vorgelagert sein, so dass zum Fügen und/oder zum Trennen der Gelenkverbindung das jeweilige Gelenkelement zumindest teilweise oder vollständig in dem Querschnittsbereich der Durchbrechung anzuordnen ist. Hierdurch kann gegebenenfalls durch wahlweise Anordnung einer Leitung oder einer anderen Einrichtung eine vollständige Trennung der Gelenkverbindung verhindert werden, wobei jedoch Zugkräfte auf die Glieder überwiegend oder vollständig durch die Gelenkverbindung aufgenommen werden. Eine derartige Anordnung einer Leitung oder Einrichtung in der Durchbrechung ist auch nicht zwingend notwendig.

Die Strebe kann jeweils in Art eines Sockel ausgeführt sein, der die Gelenkelemente nur einseitig unterstützt, die Strebe kann auch als Steg ausgeführt sein, wobei gegebenenfalls die Gelenkelemente mit mehreren Streben verbunden sein können. An der Gelenkverbindung kann auch mindestens eine Strebe angreifen, vorzugsweise zwei oder mehr Streben, die sich quer zu der Zusammenführungsrichtung der Glieder erstreckt und mit dieser beispielsweise einen Winkel von 60° oder 90° einschließen können, ohne hierauf beschränkt zu sein.

Ferner kann die Strebe derart ausgebildet sein, dass es zum Fügen der Gelenkverbindung notwendig ist, das korrespondierende Gelenkelement zumindest teilweise in die Strebe, z.B. einen Sockel, einzuführen. Hierbei können Strebenbereiche eine Führung für das korrespondierende Gelenkelement oder das zu verbindende Glied aufweisen, wobei die Führung einen mehr oder weniger großen Spielraum für eine Bewegung der Gelenkelemente oder Glieder zueinander ermöglichen kann oder eine im wesentlichen spielfreie Führung darstellen kann. Es versteht sich, dass gegebenenfalls auch bei anderen Ausführungen der Kabelführung entsprechende Führungsbereiche zum Zusammenfügen und/oder Trennen der Glieder oder der Gelenkverbindungen vorgesehen sein können.

Vorzugsweise ist zur Trennung der Gelenkverbindung an der Gelenkkörperaufnahme, die ansonsten den Gelenkkörper von dieser Richtung her praktisch vollständig umschliessen kann, mindestens eine Durchtrittsöffnung vorgesehen, welcher der Aufnahmeöffnung zur Einführung des Gelenkkörpers vorzugsweise im wesentlichen gegenüberliegt, wobei in die Durchtrittsöffnung ein Werkzeug zur Demontage des Gelenkkörpers einführbar ist. Gegebenenfalls kann die Gelenkverbindung durch linearen Druck durch das Werkzeug auf den Gelenkkörper gelöst werden. Vorzugsweise ist die Durchtrittsöffnung mit einem Absatz versehen, an den das Werkzeug hebelartig anlegbar ist, so dass die Gelenkverbindung aufgehebelt werden kann. Gegebenenfalls können jedoch auch andere Anlageflächen für einen hebelnden Einsatz des Werkzeuges vorgesehen sein. Gegebenenfalls kann die Gelenkverbindung bei ausreichender Krafteinwirkung auch durch eine hebelartige Verkantung der Glieder gegeneinander gelöst werden.

Vorzugsweise sind die Gelenkverbindungen einstückig ausgeführt, besonders bevorzugt sind die Glieder insgesamt einstückig ausgeführt, so dass auf weitere Verbindungselemente verzichtet werden kann.

Vorzugsweise bilden die Glieder, gegebenenfalls bis auf schlitzförmige Durchbrechungen zur Einführung und Entnahme von Leitungen oder dergleichen, vollumfänglich geschlossene Rohrelemente, so dass durch die Glieder ein vollumfänglich geschlossenes Gelenkrohr zusammensetzbar ist. Vorzugsweise ist das Gelenkrohr in sämtlichen Gelenkstellungen der Glieder zueinander vollumfänglich und über die gesamte Länge geschlossen. Die Glieder können jedoch auch eine mehr oder wenig offene Gestalt aufweisen, solange eine sichere Führung der Leitungen innerhalb der Kabelführungen gewährleistet ist.

Die Glieder können jeweils an einem oder an beiden Enden einander übergreifende Bereiche aufweisen, die in Form eines kugelkalottenartigen Abschnittes ausgebildet sind, welcher sich jeweils vorzugsweise vollumfänglich um die Kabelführung erstreckt. Der Kugelmittelpunkt der kugelkalottenartigen Abschnitte kann jeweils mit dem Zentrum der Gelenkachse bzw. dem Zentrum der jeweiligen Gelenkverbindung, die dem Ende des jeweiligen Gliedes zugeordnet ist, zusammenfallen. Die endseitigen kugelkalottenartigen Abschnitte können durch einen mittleren Abschnitt voneinander getrennt sein. Unabhängig hiervon sind die Gelenkachsen in Kabelführungslängsrichtung auf Höhe der Krümmungsmittelpunkte der kalottenartigen Abschnitte und/oder auf Höhe der grössten radialen Ausdehnung der kalottenartigen Abschnitte angeordnet. Die Gelenkachsen können so angeordnet sein, dass sie diese Abschnitte grösster radialer Ausdehnung, die konstruktiv realisiert oder in gedanklicher Extrapolation vorhandener Abschnitte vorliegen können, durchstossen.

Vorzugsweise weisen die Glieder schlitzförmige Durchbrechungen zur Einführung oder Entnahme von Leitungen auf, die sich über die gesamte Gliedlänge erstrecken, wobei die schlitzförmigen Durchbrechungen benachbarter Glieder auf gleicher Umfangshöhe angeordnet sind, so dass über mehrere Glieder oder über die gesamte Länge der Kabelführung ein durchgehender Schlitz bereitgestellt wird.

Insbesondere dann, wenn die Glieder ein vollumfänglich geschlossenes Rohr bilden, können die Führungselemente mit Durchbrechungen, vorzugsweise verschließbaren Durchbrechungen, oder Sollbruchstellen versehen sein, durch welche Werkzeuge, insbesondere Schraubendreher oder dergleichen in den Führungskanal einführbar sind, so dass die Gelenkverbindungen von außen lösbar sind. Die Sollbruchstellen können als Folienverschlüsse, Perforationen oder dergleichen ausgeführt sein, und eine Öffnung definieren, so dass im Normalzustand ein geschlossenes Rohr vorliegt. Die Durchbrechungen oder Sollbruchstellen sind vorzugsweise in Kabelführungslängsrichtung auf Höhe der Gelenkverbindungen angeordnet. Hierbei können bei gestreckter Kabelführung einander überlappende Bereiche benachbarter Glieder mit fluchtend zueinander angeordneten Durchbrechungen oder Sollbruchstellen versehen sein, die Durchbrechungen oder Sollbruchstellen können auch derart angeordnet sein, dass sie nur an einem Glied, beispielsweise dem jeweils radial außen liegenden Glied, vorgesehen sind und bei abgewinkelter Stellung der Glieder zueinander ein Durchgriff in das Innere der Kabelführung ermöglicht ist.

Vorzugsweise sind die Durchbrechungen oder Sollbruchstellen in der Ebene eines gabelförmigen Elementes angeordnet, wobei die beiden Gabelenden auf verschiedenen Seiten der Ebene angeordnet sind.

Zur Begrenzung der Abwinkelungsbewegung benachbarter Glieder sind vorzugsweise die Führungselemente mit Anschlagbereichen versehen, beispielsweise Stoßkanten zur flächigen Anlage eines korrespondierenden Anschlages des benachbarten Gliedes. Gegebenenfalls können zusätzlich oder alternativ die Anschläge jedoch auch im Bereich der radial innen liegenden Gelenkverbindungen vorgesehen sein.

Vorzugsweise sind sämtliche Glieder der Kabelführung baugleich ausgeführt.

Vorzugsweise sind die Gelenkverbindungen derart ausgeführt, dass diese unabhängig voneinander unter vollständiger Trennung der Kabelführung lösbar sind. Hierdurch kann die Kabelführung in einzelne Segmente zerlegt werden, deren Glieder untereinander nach wie vor gelenkig verbunden sind, vorzugsweise kann die Kabelführung an jeder beliebigen Stelle zwischen benachbarten Gliedern getrennt werden, beispielsweise um einzelne Glieder austauschen zu können. Der übrige Strang der Kabelführung bleibt hierbei vorzugsweise unverändert. Hierzu können geeignete Formschluss- und/oder Kraftschlussmittel an den Gelenkverbindungen vorgesehen sein, die lediglich zwischen zwei benachbarten Gliedern wirken. Die Formschlussmittel können insbesondere als Rastmittel ausgebildet sein.

Die Erfindung wird nachfolgend beispielhaft beschrieben und anhand der Figuren erläutert. Es zeigen:
- Fig. 1: eine Anordnung von zwei montierten Gliedern einer erfindungsgemäßen Kabelführung in Kabelführungslängsrichtung (Fig. 1a, 1b) und in zwei um 90° um die Kabelführungslängsrichtung verdrehten Seitenansichten (Fig. 1c, 1d),
- Fig. 2: eine Querschnittsdarstellung der Anordnung gemäß Fig. 1 entlang der Linie A-A,
- Fig. 3: perspektivische Ansichten (Fig. 3a, 3b) zweier Glieder gemäß Fig. 1 und entsprechende Schnittdarstellungen (Fig. 3c, 3d),
- Fig. 4: um 90° in Kabelführungslängsrichtung gegeneinander verdrehte Seitenansichten (Fig. 4a, 4b), eine stirnseitige Ansicht (Fig. 4c) und eine Schnittdarstellung (Fig. 4d) eines Kettengliedes einer weiteren Ausführungsform,
- Fig. 5: verschiedene perspektivische Ansichten eines Gliedes nach Fig. 4 und eine perspektivische Schnittansicht desselben.

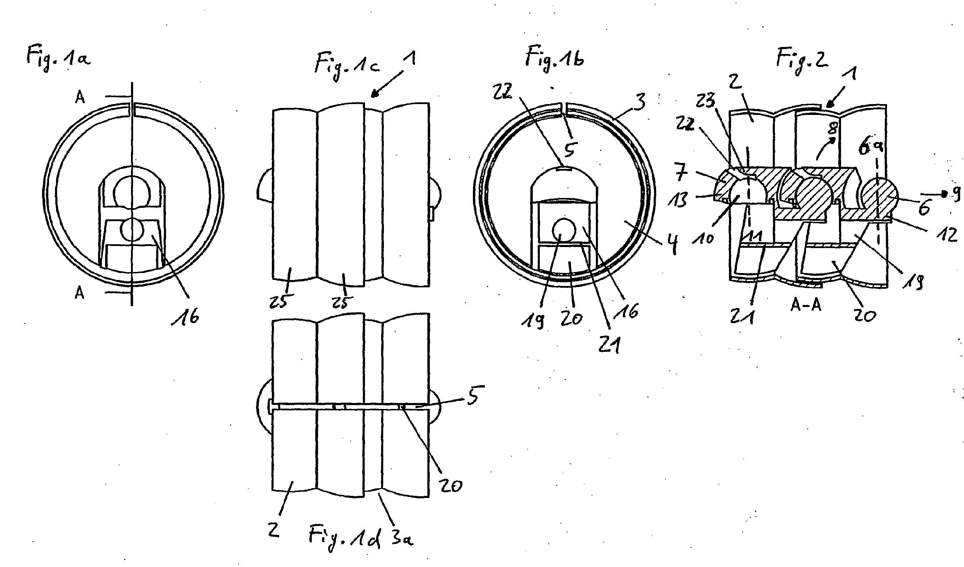

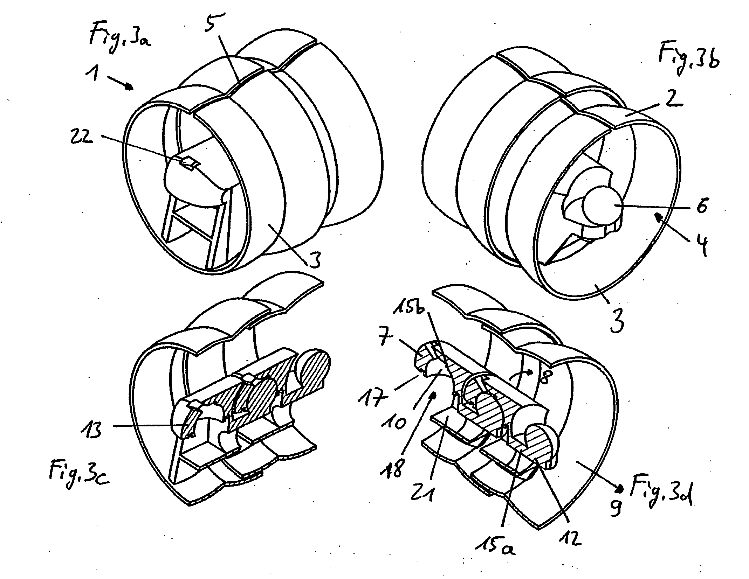

Die erfindungsgemäße Kabelführung 1 (Fig. 1 bis 3) besteht aus einer Vielzahl von gelenkig miteinander verbundenen und jeweils zumindest in zwei Richtungen gegeneinander abwinkelbaren stirnseitig offenen Glieder 2 (siehe Fig. 1, 2), die jeweils nach dem Ausführungsbeispiel rotationssymmetrische Außenkonturen aufweisen. Durch radial außen liegende Führungselemente 3 wird ein Führungskanal 4 nach außen begrenzt, der hier praktisch vollständig geschlossen ist. Die Führungselemente bilden nach dem Ausführungsbeispiel Abschnitte des Rotationskörpers, die sich über die gesamte Länge der Glieder erstrecken. Benachbarte Führungselemente 3 sind durch sich über die gesamte Gliederlänge erstreckende Schlitze 5 getrennt, durch welche Leitungen in den Führungskanal einführbar oder herausnehmbar sind. Die Glieder sind hierbei derart aneinander montiert, dass die Schlitze benachbarter Glieder bei einer ausgewählten Anordnung der Kabelführung, z.B. bei gestreckter Kabelführung, ineinander übergehen, so dass die gesamte Kabelführung einen sich über deren Länge erstreckenden Schlitz aufweist (Fig. 3a).

Die Gelenkverbindungen der Glieder werden durch Gelenkelemente 6, 7 gebildet, die derart ausgeführt sind, dass zur Fügung und/oder Lösung der jeweiligen Gelenkverbindung, die jeweils miteinander zu verbindenden und/oder voneinander zu lösenden Glieder 2 in einer Richtung 8 zusammenzuführen und/oder zu trennen sind, die zu der Kabelführungslängsachse 9, die bei deren gestreckter Anordnung vorliegt, einen Winkel einschließt. Nach dem Ausführungsbeispiel sind hierzu die benachbarten Glieder in einem Winkel von ungefähr 75° aufeinander zu bzw. voneinander weg zu bewegen, wobei die Bewegung durch eine Schwenkbewegung der Glieder gegeneinander unterstützt oder überlagert sein kann. Beim Beginn der Trennung und/oder am Ende des Fügevorganges sind die benachbarten Glieder sowie die Gelenkelemente im wesentlichen um 90° zur Kabelführungslängsachse 9 gegeneinander zu bewegen.

Die Gelenkelemente 6 und 7 des Ausführungsbeispiels sind als miteinander korrespondierende Gelenkkugel und Kugelpfanne ausgeführt. Die Aufnahme 10 der Kugelpfanne weist eine Längsachse 11 auf, die der neutralen Stellung der mit einem Befestigungsbereich 12 versehenen Gelenkkugel, die in der Aufnahme angeordnet ist, entspricht. Die Längsachse 11 der Aufnahme schließt somit ebenfalls einen Winkel zu der Kabelführungslängsachse 9 ein, nach dem Ausführungsbeispiel einen Winkel von 90°. Durch die Schrägstellung der Gelenkkörperaufnahme bzw. der Kugelpfanne liegt das korrespondierende Gelenkelement, welches hier als Gelenkkugel dargestellt ist, bei Zug- und/oder Schubausübung in Kabelführungslängsrichtung an einem Bereich 13 der Aufnahme an, welcher in einer die Kabelführungslängsachse enthaltenen Ebene das Gelenkelement vollumfänglich umgibt. Hierdurch können hohe in Kabelführungslängsrichtung wirkende Zug- und/oder Schubkräfte von den Gelenkverbindungen aufgenommen werden. Entsprechendes würde auch bei einer Schrägstellung der Kugelpfanne und des Kugelgelenkes bzw. andersartiger Gelenkelemente gelten, die von der gezeigten orthogonalen Anordnung verschieden wäre.

Die Längsachse 6a des kugelförmigen Gelenkelementes 6, die hier durch den Kugelmittelpunkt und den Befestigungsbereich 12 des Gelenkelementes verläuft, steht hierbei ebenfalls senkrecht zu der Kabelführungslängsachse 9. Es versteht sich, dass gegebenenfalls die Winkel zwischen der Längsachse des Gelenkkörpers 6 und der Aufnahme 10, die diese mit der Kabelführungslängsachse 9 einschließen, gegebenenfalls auch voneinander verschieden sein können.

Das kugelförmige Gelenkelement 6 und das kugelpfannenartige Gelenkelement 7 sind jeweils auf einem stegartigen Bereich aufgesetzt, welcher an einem Sockel 16 angeordnet ist, der ein Führungselement 3 trägt, welches sich praktisch über den gesamten Umfang der Kabelführung erstreckt. Die stegartigen Bereiche 15a,b (Fig. 3d) sind hierbei in einer senkrecht zur Kabelführungslängsachse 9 stehenden Richtung gegeneinander versetzt angeordnet. Durch die stegartigen Bereiche 15a,b, den endständigen Bereich der Kugelpfanne und die Gelenkkugel werden somit im wesentlichen Z-förmige, einander hintergreifende Verbindungselemente geschaffen, die hohe Zugkräfte aufnehmen können, wobei es sich versteht, dass dies auch durch andere Gelenkelemente realisiert werden kann, beispielsweise durch geeignet angeordnete stiftförmige Gelenkelemente und korrespondierende Aufnahmen.

Die Gelenkelemente 6, 7 werden nach dem Ausführungsbeispiel rastend miteinander verbunden. Zur Erleichterung der Demontage der Glieder ist um die Aufnahme 10 eine Nut 17 vorgesehen, die hier als Ringnut ausgeführt ist und zu der Aufnahmeöffnung 18 hin offen ist.
Der Sockel 16 weist unterhalb der Gelenkelemente 6, 7 eine Durchbrechung 19 zur Aufnahme von Leitungen oder andere Einrichtungen wie sich über mehrere Glieder hinweg erstreckender Federstäbe auf, unterhalb derer eine weitere Durchbrechung 20 vorgesehen ist, wobei bei gestreckter Kabelführung sämtliche Durchbrechungen 19, 20 fluchtend zueinander angeordnet sind. Die Durchbrechungen 19, 20 sind vollumfänglich geschlossen, sie können jedoch auch unabhängig voneinander seitlich geöffnet sein.

Um die Fügung der Gelenkverbindung zu erleichtern ist an dem Sockel 16 eine Führung 21 in Form eines sich quer zur Füge- bzw. Demontagerichtung erstreckenden Steges vorgesehen. Zum Fügen der Glieder kann somit das kugelförmige Gelenkelement 6 in etwa auf der der Aufnahme 10 zugewandten Seite der Führung 21 positioniert werden und anschließend in die Aufnahme 10 eingerastet werden. Bei dem Fügevorgang verdeckt das kugelförmige Gelenkelement 6 im Querschnitt die Durchbrechung 19 teilweise oder vollständig. Leitungen oder Einrichtungen können somit bei montierter Kabelführung durch die Durchbrechung 19, 20 eingeführt werden, wobei diese in Kabelführungslängsrichtung keine Zugkräfte aufnehmen oder aufnehmen müssen.

Zur erleichterten Trennung der Glieder ist das pfannenartige Gelenkelement 7 mit einer schlitzförmigen Durchtrittsöffnung 22 versehen, in welche von außerhalb der Kabelführung ein Werkzeug eingeführt und gegen das kugelförmige Gelenkelement unter Demontage desselben gepresst werden kann. Hierzu können in den Führungselementen 3 gegebenenfalls verschließbare Durchbrechungen oder Sollbruchstellen versehene verschlossene Bereiche vorgesehen sein, die Führungselemente können auch in einer bestimmten Stellung zwischen diesen einen Bereich freigeben. Gegebenenfalls kann das Werkzeug auch durch den Schlitz 5 eingeführt werden. Die Durchtrittsöffnung 22 weist hierbei einen Absatz 23 auf, gegen den das Werkzeug hebelartig angelegt werden kann und so im wesentlichen gegen den Scheitel des kugelförmigen Gelenkelementes 6 gepresst werden kann.

Durch die Glieder wird ein im wesentlichen geschlossenes Rohr gebildet (siehe Fig. 3a) wozu die Glieder beidseitig einander überlappende Endbereiche 25 aufweisen, die in Form von Kugelkalottenabschnitten ausgeführt sind, und die gegebenenfalls durch einen mittleren Bereich getrennt sein können. Die Endbereiche greifen hierbei ineinander ein. Die Gelenkelemente 6,7 stehen axial von den Endbereichen vor. Unabhängig hiervon sind die Gelenkachsen 6a, 11 der Gelenkbereiche 6, 7 in Kabelführungslängsrichtung auf Höhe der Krümmungsmittelpunkte der Kugelkalottenabschnitte angeordnet bzw. durchstoßen die Kugelkalottenabschnitte in den Bereichen maximalen Durchmessers. Die Führungselemente 3 erstrecken sich insgesamt bis auf die Schlitze 5 über den gesamten Umfang der Kabelführung. Es versteht sich, dass gegebenenfalls die Schlitze auch eine größere Weite aufweisen können. Gegebenenfalls könnend die Endbereiche der Glieder auch eine andere Form aufweisen, solange eine Abwinkelungsbewegung der Glieder zueinander um die Gelenkachsen ermöglicht ist.

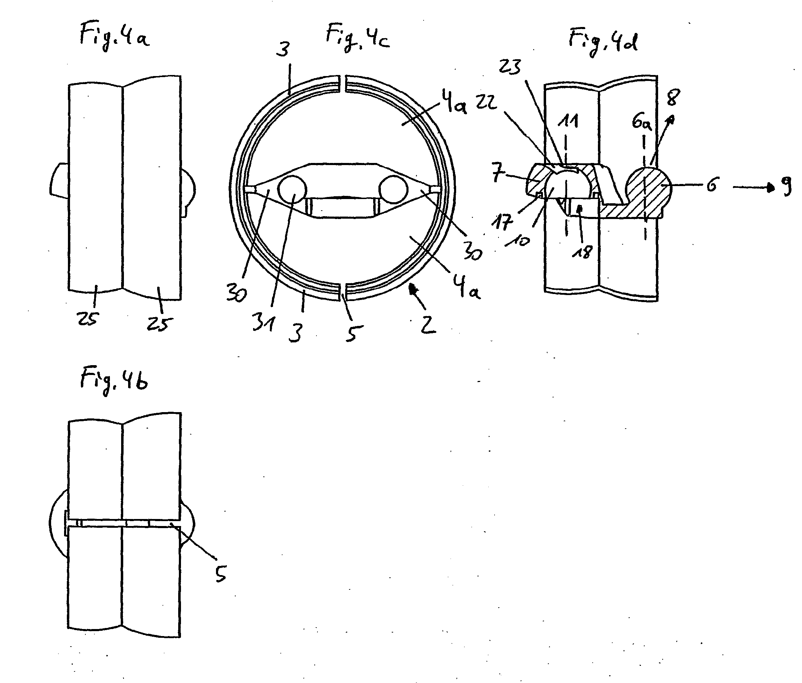

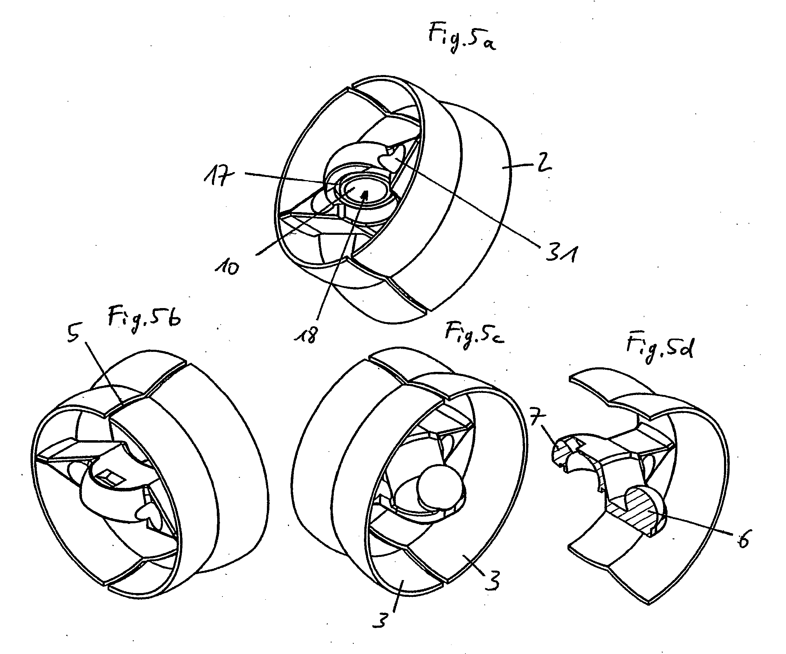

Das Ausführungsbeispiel gemäß den Fig. 4 und 5 stellt eine Abwandlung des Ausführungsbeispiels der Fig. 1 bis 3 dar, wobei gleiche Merkmale mit gleichen Bezugsziffern versehen sind. Dieses Ausführungsbeispiel unterscheidet sich im wesentlichen durch die Verbindung der Gelenkelemente mit den Führungselementen.

Nach diesem Ausführungsbeispiel sind die Gelenkelemente 6, 7, die entsprechend den Elementen des ersten Ausführungsbeispiels ausgeführt sind, durch mindestens eine Strebe 30 mit den radial außen liegenden Führungselementen 3 verbunden. Die beiden gegenüberliegenden Streben 30 sind hierbei quer zu der Zusammenführungsrichtung bzw. Demontagerichtung 8 der Glieder angeordnet und stehen hier senkrecht zu dieser. Durch die beiden Streben werden zwei Führungskanäle 4a gebildet. Die Streben 30 sind mit Durchbrechungen 31 versehen, durch welche wahlweise Leitungen oder andere Einrichtungen wie die oben genannten Federstäbe durchgeführt werden können. Die Streben 30 verjüngen sich radial nach außen hin.

Die Streben 30, wie auch der Sockel 16 der Figuren 1-3, sind jeweils überwiegend, nach den Ausführungsbeispielen praktisch ausschließlich, an nur einem der kalottenförmigen Endbereiche der Glieder 2 befestigt. Gegebenenfalls kann zwischen den kalottenförmigen Endbereichen ein mittlerer Bereich zur Verlängerung der Glieder vorgesehen sein.

Zur Begrenzung der Verschwenkstellung gelenkig miteinander verbundener Glieder 2 können die Außenseiten der Führungselemente 3 bzw. deren Stirnseiten als Anschläge 3a fungieren, gegebenenfalls können auch die den Führungselementen 3 benachbarten Bereiche des Sockels 16 oder der Streben 30, insbesondere wenn mehr als zwei Streben vorgesehen sind, als Anschläge dienen.

### Bezugszeichenliste

- 1: Kabelführung
- 2: Glied
- 3: Führungselement
- 3a: Anschlag
- 4, 4a: Führungskanal
- 5: Schlitz
- 6: Gelenkelement
- 6a: Längsachse
- 7: Gelenkelement
- 8: Richtung
- 9: Kabelführungslängsachse
- 10: Aufnahme
- 11: Längsachse
- 12: Befestigungsbereich
- 13: Bereich
- 14: Gelenkelementlängsachse
- 15: stegartiger Bereich
- 16: Sockel
- 17: Nut
- 18: Aufnahmeöffnung
- 19,20: Durchbrechung
- 21: Führung
- 22: Durchtrittsöffnung
- 23: Absatz
- 25: Endbereich
- 30: Strebe
- 31: Durchbrechung

## Patentansprüche

1. Kabelführung aus gelenkig miteinander verbundenen und jeweils zumindest in zwei Richtungen gegeneinander abwinkelbaren, stirnseitig offenen Gliedern, die in Längsrichtung der Kabelführung hintereinander angeordnet sind und mittels radial außenseitiger Führungselemente zumindest einen Führungskanal bilden, wobei zugkräfteaufnehmende Gelenkverbindungen zwischen miteinander gelenkig verbundenen Gliedern innerhalb der Kabelführung angeordnet sind und die Glieder jeweils miteinander korrespondierende Gelenkelemente aufweisen, **dadurch gekennzeichnet, dass** zumindest eine Gelenkverbindung (6,7) derart ausgeführt ist, dass zur Ausbildung und/oder Lösung der Gelenkverbindung die jeweils miteinander zu verbindenden und/oder voneinander zu lösenden Glieder (2) und/oder Gelenkelemente in einer Richtung (8) zusammenzuführen und/oder zu trennen sind, die zur Kabelführungslängsachse (9) einen Winkel einschließt.

2. Kabelführung nach Anspruch 1, **dadurch gekennzeichnet, dass** die Gelenkelemente miteinander gelenkig verbundener Glieder (2) als Gelenkkörper (6), insbesondere als Gelenkkugel, und als Gelenkkörperaufnahme (7), insbesondere als Kugelpfanne, ausgebildet sind.

3. Kabelführung nach Anspruch 1 oder 2, **dadurch gekennzeichnet, dass** die Richtung (8) zum Zusammenführen der Glieder und/oder der Gelenkelemente zur Ausbildung der Gelenkverbindung und/oder zur Trennung der Gelenkverbindung mit der Kabelführungslängsachse (9) einen Winkel von 45° bis 135° einschließt.

4. Kabelführung nach Anspruch 2 oder 3, **dadurch gekennzeichnet, dass** Gelenkachsen (6a, 11) eines oder beider Gelenkelemente (6,7) quer zur Kabelführungslängsachse (9) stehen.

5. Kabelführung nach einem der Ansprüche 1 bis 4, **dadurch gekennzeichnet, dass** die Gelenkelemente (6,7) jeweils von einer Unterstützung (15a,b) abgestützt werden und die Unterstützungen der beiden Gelenkelemente (6,7) eines Gliedes in einer Richtung senkrecht zu der Kabelführungslängsachse (9) versetzt zueinander angeordnet sind.

6. Kabelführung nach einem der Ansprüche 1 bis 5, **dadurch gekennzeichnet, dass** die Gelenkverbindung eine Rastverbindung ist.

7. Kabelführung nach einem der Ansprüche 2 bis 6, **dadurch gekennzeichnet, dass** benachbart einer Aufnahmeöffnung (18) der Gelenkkörperaufnahme für den Gelenkkörper mindestens eine sich in ihrer Längsrichtung zumindest teilumfänglich um die Aufnahme (10) erstreckende Ausnehmung (17) vorgesehen ist.

8. Kabelführung nach einem der Ansprüche 1 bis 7, **dadurch gekennzeichnet, dass** Glieder vorgesehen sind, die mit zumindest einer sich quer zur Kabelführungslängsrichtung erstreckenden Strebe (16,30) versehen sind, die gegebenenfalls ein Führungselement (3) trägt, und dass die Strebe (16,30) mindestens eine sich in Kabelführungslängsrichtung erstreckende Durchbrechung (19,20,31) zur wahlweisen Aufnahme einer Leitung oder einer anderen Einrichtung innerhalb der Kabelführung aufweist.

9. Kabelführung nach Anspruch 8, **dadurch gekennzeichnet, dass** die Strebe als Sockel (16) ausgeführt ist.

10. Kabelführung nach einem der Ansprüche 1 bis 9, **dadurch gekennzeichnet, dass** die Glieder jeweils nur ein Führungselement (3) aufweisen, dass sich über zumindest nahezu den gesamten Umfang der Kabelführung erstreckt.

11. Kabelführung nach einem der Ansprüche 2 bis 10, **dadurch gekennzeichnet, dass** die Gelenkkörperaufnahme (7) mit einer Durchtrittsöffnung (22) versehen ist, in welcher ein Werkzeug zur Demontage des Gelenkkörpers einführbar ist.

12. Kabelführung nach Anspruch 11, **dadurch gekennzeichnet, dass** die Durchtrittsöffnung (22) einen von der Innenseite der Gelenkkörperaufnahme beabstandeten Absatz (23) aufweist, an den ein Werkzeug hebelartig anlegbar ist.

13. Kabelführung nach einem der Ansprüche 1 bis 12, **dadurch gekennzeichnet, dass** die Glieder einstückig ausgeführt sind.

14. Kabelführung nach einem der Ansprüche 1 bis 13, **dadurch gekennzeichnet, dass** die Glieder, gegebenenfalls bis auf mindestens eine schlitzförmige, sich über die gesamte Gliedlänge erstreckende Durchbrechung (5), einen umfänglich vollständig geschlossenen Rohrabschnitt ausbilden.

15. Kabelführung nach einem der Ansprüche 1 bis 14, **dadurch gekennzeichnet, dass** die Glieder (2) eine rotationssymmetrische Umhüllende und in Kabelführungslängsrichtung einander übergreifende Endbereiche (25) aufweisen, die als kugelkalottenartige Abschnitte ausgeführt sind.

16. Kabelführung nach einem der Ansprüche 1 bis 15, **dadurch gekennzeichnet, dass** zumindest eine oder sämtliche der Gelenkverbindungen (6,7) unabhängig von anderen Gelenkverbindungen unter vollständiger Trennung der Kabelführung lösbar sind.

17. Kabelführung nach einem der Ansprüche 1 bis 16, **dadurch gekennzeichnet, dass** mindestens ein Führungselement (3) eines Gliedes mindestens eine, vorzugsweise verschließbare, Durchbrechung (5) oder Sollbruchstelle zum radial einwärts gerichteten Einführen eines Werkzeuges in die Kabelführung zur Trennung mindestens einer Gelenkverbindung des Gliedes aufweist.

## Claims

1. Cable-routing device comprising links that are open at the ends, joined together in pivoting fashion and can be angled relative to each other in at least two directions, said links being arranged one behind the other in the longitudinal direction of the cable-routing device and forming at least one guide channel by means of guide elements located radially outwards, where tensile force-absorbing pivoting joints are located between links joined together in pivoting fashion within the cable-routing device and the links each display corresponding joint elements, **characterized in that** at least one pivoting joint (6, 7) is designed in such a way that, in order to form and/or disconnect the pivoting joint, the respective links (2) and/or joint elements to be joined to one another and/or disconnected from one another can be joined and/or separated in a direction (8) that encloses an angle relative to the longitudinal axis (9) of the cable-routing device.

2. Cable-routing device according to Claim 1, **characterised in that** the joint elements of links (2) joined together in pivoting fashion are designed as a joint body (6), particularly a joint ball, and a joint body receptacle (7), particularly a ball socket.

3. Cable-routing device according to Claim 1 or 2, **characterised in that** the direction (8) for connecting the links and/or the joint elements to form the pivoting joint and/or for disconnecting the pivoting joint encloses an angle of 45° to 135° with the longitudinal axis (9) of the cable-routing device.

4. Cable-routing device according to Claim 2 or 3, **characterised in that** the joint axes (6a, 11) of one or both joint elements (6, 7) are transverse to the longitudinal axis (9) of the cable-routing device.

5. Cable-routing device according to one of Claims 1 to 4, **characterised in that** the joint elements (6, 7) are each supported by a support (15a,b) and the supports of the two joint elements (6, 7) of a link are offset relative to each other in a direction perpendicular to the longitudinal axis (9) of the cable-routing device.

6. Cable-routing device according to one of Claims 1 to 5, **characterised in that** the pivoting joint is a snap-in connection.

7. Cable-routing device according to one of Claims 2 to 6, **characterised in that** at least one recess (17) is provided adjacent to a receiving opening (18) for the joint body in the joint body receptacle, extending in its longitudinal direction at least partially around the circumference of the receptacle (10).

8. Cable-routing device according to one of Claims 1 to 7, **characterised in that** links are provided that are provided with at least one brace (16, 30), extending transverse to the longitudinal direction of the cable-routing device and possibly bearing a guide element (3), and **in that** the brace (16, 30) displays at least one opening (19, 20, 31) extending in the longitudinal direction of the cable-routing device, which can optionally serve to accommodate a line or other device within the cable-routing device.

9. Cable-routing device according to Claim 8, **characterised in that** the brace is designed as a base (16).

10. Cable-routing device according to one of Claims 1 to 9, **characterised in that** the links each display only one guide element (3), which extends at least around almost the entire circumference of the cable-routing device.

11. Cable-routing device according to one of Claims 2 to 10, **characterised in that** the joint body receptacle (7) is provided with an opening (22), into which a tool for disassembling the joint body can be inserted.

12. Cable-routing device according to Claim 11, **characterised in that** the opening (22) displays a shoulder (23), a distance away from the inside of the joint body receptacle, against which a tool can be positioned in the manner of a lever.

13. Cable-routing device according to one of Claims 1 to 12, **characterised in that** the links are of one-piece design.

14. Cable-routing device according to one of Claims 1 to 13, **characterised in that** the links form a tubular section that is closed around the entire circumference, apart from at least one slit-type opening (5) extending over the entire length of the link, where appropriate.

15. Cable-routing device according to one of Claims 1 to 14, **characterised in that** the links (2) display a rotationally symmetrical envelope and end areas (25), overlapping in the longitudinal direction of the cable-routing device, that are designed as spherical cap-like sections.

16. Cable-routing device according to one of Claims 1 to 15, **characterised in that** at least one, or all, of the pivoting joints (6, 7) can be disconnected independently of other pivoting joints, completely disconnecting the cable-routing device.

17. Cable-routing device according to one of Claims 1 to 16, **characterised in that** at least one guide element (3) of a link displays at least one, preferably closable, opening (5) or predetermined breaking point for radially inward insertion of a tool into the cable-routing device for disconnecting at least one pivoting joint of the link.

## Revendications

1. Guide-câble constitué d'éléments ouverts sur la face, reliés entre eux de manière articulée, et pouvant être pliés l'un contre l'autre dans au moins deux directions, lesquels sont disposés les uns derrière les autres dans la direction longitudinale du guide-câble et forment au moins un canal de guidage à l'aide d'éléments de guidage orientés radialement vers l'extérieur, des assemblages articulés supportant des forces de traction étant disposés entre des éléments reliés entre eux de manière articulée à l'intérieur du guide-câble, et les éléments comprenant respectivement des éléments articulés correspondant entre eux, **caractérisé en ce qu'**au moins un assemblage à rotule (6, 7) est développé de telle sorte que, en vue du montage et/ou du démontage de l'assemblage à rotule, les éléments (2) et/ou les éléments articulés devant être respectivement reliés entre eux et/ou détachés les uns des autres soient amenés ensemble dans une direction (8), laquelle inclut un angle par rapport à l'axe longitudinal du guide-câble (9).

2. Guide-câble selon la revendication 1, **caractérisé en ce que** les éléments articulés d'éléments (2) reliés entre eux de manière articulée, sont conçus en tant que corps articulés (6), en particulier en tant que rotule articulée, et en tant que logement de corps articulé (7), en particulier en tant que cuvette rotule.

3. Guide-câble selon la revendication 1 ou 2, **caractérisé en ce que** la direction (8) inclut un angle situé de 45° à 135°, en vue de réunir les éléments et/ou les éléments articulés pour former l'assemblage à rotule et/ou pour séparer l'assemblage à rotule avec l'axe longitudinal du guide-câble (9).

4. Guide-câble selon la revendication 2 ou 3, **caractérisé en ce que** les axes articulés (6a, 11) d'un ou de deux élément(s) articulé(s) (6, 7) est/sont orienté(s) transversalement par rapport à l'axe longitudinal du guide-câble (9).

5. Guide-câble selon l'une quelconque des revendications 1 à 4, **caractérisé en ce que** les éléments articulés (6, 7) sont soutenus respectivement par un support (15a, b) et que les supports des deux éléments (6, 7) d'un élément sont disposés les uns par rapport aux autres dans une direction verticalement par rapport à l'axe longitudinal du guide-câble (9).

6. Guide-câble selon l'une quelconque des revendications 1 à 5, **caractérisé en ce que** l'assemblage à rotule est un assemblage d'arrêt.

7. Guide-câble selon l'une quelconque des revendications 2 à 6, **caractérisé en ce qu'**au moins une ouverture (17) est prévue de manière adjacente à une ouverture de logement (18) du logement de corps articulé pour le corps articulé, laquelle s'étend dans sa direction longitudinale au moins en partie autour du logement (10).

8. Guide-câble selon l'une quelconque des revendications 1 à 7, **caractérisé en ce que** des éléments sont prévus, lesquels sont pourvus d'au moins un étai (16, 30) s'étendant transversalement par rapport à la direction longitudinale du guide-câble, lequel supporte éventuellement un élément de guidage (3), et **en ce que** l'étai (16, 30) présente au moins une perforation (19, 20, 21) s'étendant dans la direction longitudinale du guide-câble en vue du logement sélectif d'une conduite ou d'un autre dispositif à l'intérieur du guide-câble.

9. Guide-câble selon la revendication 8, **caractérisé en ce que** l'étai est conçu en tant que socle (16).

10. Guide-câble selon l'une quelconque des revendications 1 à 9, **caractérisé en ce que** les éléments ne présentent respectivement qu'un élément de guidage (3), s'étendant au moins presque sur toute l'étendue du guide-câble.

11. Guide-câble selon l'une quelconque des revendications 2 à 10, **caractérisé en ce que** le logement du corps articulé (7) est pourvu d'une ouverture de passage (22), dans laquelle un outil peut être introduit en vue du démontage du corps articulé.

12. Guide-câble selon la revendication 11, **caractérisé en ce que** l'ouverture de passage (22) présente un épaulement (23) espacé de la paroi intérieure du logement de corps articulé, sur lequel un outil peut être disposé à la façon d'un levier.

13. Guide-câble selon l'une quelconque des revendications 1 à 12, **caractérisé en ce que** les éléments sont développés en une seule pièce.

14. Guide-câble selon l'une quelconque des revendications 1 à 13, **caractérisé en ce que** les éléments forment une section de tuyau fermée totalement et de manière étendue, éventuellement jusqu'à au moins une perforation (5) en forme de fente et s'étendant sur toute la longueur de l'élément.

15. Guide-câble selon l'une quelconque des revendications 1 à 14, **caractérisé en ce que** les éléments (2) présentent une enveloppe tournant symétriquement et des zones d'extrémité (25) se chevauchant dans la direction longitudinale du guide-câble, lesquelles sont conçues en tant que sections de type coque-sphère.

16. Guide-câble selon l'une quelconque des revendications 1 à 15, **caractérisé en ce qu'**au moins un ou plusieurs assemblages articulés (6, 7) peut/peuvent être détaché(s) par une séparation totale du guide-câble, indépendamment d'autres assemblages articulés.

17. Guide-câble selon l'une quelconque des revendications 1 à 16, **caractérisé en ce qu'**au moins un élément de guidage (3) d'un élément présente au moins une perforation (5), pouvant être de préférence fermée, ou un point destiné à la rupture en vue de l'introduction orientée radialement vers l'intérieur d'un outil dans le guide-câble en vue de la séparation d'au moins un assemblage à rotule de l'élément.
